# EUROPEAN PATENT APPLICATION

(11) **EP 1 332 823 A1**
(43) Date of publication of application: **06.08.2003**
(21) Application number: 01956774.2
(22) Date of filing: 31.07.2001
(51) Int. Cl.: B23F 19/00

(54) **GEAR, AND METHOD AND DEVICE FOR FINISHING TOOTH FACE OF GEAR**

(30) Priority: 01.08.2000 JP 2000233595
(71) Applicant: AISIN AW CO., LTD., Anjo-shi Aichi 444-1192 (JP)
(72) Inventor: TANIGUCHI, Takao, c/o Aisin Aw Co., Ltd., Anjo-shi, Aichi-ken 444-1192 (JP); TSUKAMOTO, Kazumasa, c/o Aisin Aw Co., Ltd., Anjo-shi, Aichi-ken 444-1192 (JP); OBAYASHI, Koji, c/o Aisin Aw Co., Ltd., Anjo-shi, Aichi-ken 444-1192 (JP); HONDA, Fumihiro, Toyota Technological Institute, Nagoya-shi, Aichi-ken 468-8511 (JP)
(74) Representative: VOSSIUS & PARTNER
(86) International application number: JP0106612
(87) International publication number: WO02009903

(57) **Abstract**

In a method for performing a finish machining on a tooth surface of a gear to be machined, in the state that at least one counter gear 2 is meshed with the gear 1 to be machined, both gears are rotated while supplying water or an aqueous solution 4 which contains no abrasive grains to meshing portions of both gears so that a surface having a small surface roughness is formed on the tooth surface of the gear 1 to be machined.

## Description

### Technical Field

The present invention relates to a tooth surface finish machining method after forming a gear.

### Background Art

In an automobile or various kinds of mechanical devices, a large kinds of and a large number of gears are assembled. In manufacturing these gears, teeth are formed by molding material such as carbon steel or alloy steel and, thereafter, a finish machining of tooth surface is performed to enhance a shape and the smoothness of the tooth surface.

As conventional tooth-surface finish machining methods, a shaving machining method which uses a shaving cutter, a polish finishing method which uses abrasive grains such as gear grinding, honing, super precision finishing, lapping, polishing, a chemical polishing method which uses a chemical attack liquid and the like have been known. Further, various methods which combine the above-mentioned respective methods and other methods also have been proposed.

Japanese Laid-open Patent Publication 101328/1999 discloses a method in which a gear which is preliminarily provided with a carburized abnormal layer (oxidized layer) and a shaving finish gear are served in actual use in a meshed form and the tooth surfaces of both gears are naturally worn and are finished in an initial stage of the operation.

Japanese Laid-open Patent Publication 193118/1989 discloses a method in which a master gear for finish machining is meshed with a gear to be machined and these gears are rotated together and rotary shafts of these gears are reciprocated in parallel so as to finish tooth surfaces of the gear to be machined by positively making the tooth surfaces wear.

Japanese Laid-open Patent Publication 318209/1989 discloses a method in which a plurality of gears to be machined are arranged on a rotary shaft in the same manner as in actual use and toothed tools are respectively arranged to correspond with these gears to be machined and the toothed tools are reciprocated and rotated such that a slipping is generated in the tooth trace direction so as to achieve the polish finishing.

Japanese Laid-open Patent Publication 100316/1986 discloses a surface finishing method which performs an electrolytic machining by polishing the surface of a work to be machined.

Japanese Laid-open Patent Publication 7221/1988 discloses a method which performs a chemical polishing before a final surface treatment.

However, the above-mentioned conventional tooth-surface finish machining method has following drawbacks.

That is, in performing the tooth-surface finish machining of each gear, a slight displacement is generated in meshing in actual use so that the improvement in terms of vibration and noises is small. Further, in the method (Japanese Laid-open Patent Publication 101328/1999) which positively generates the wear on the tooth surface in the initial stage of the operation, it is difficult to suppress the generation of the vibration and noises at the time of the initial operation. Further, the above-mentioned other conventional techniques have not always achieved the sufficient vibration and noise suppression effect when they are served actual operation.

The present invention has been made in view of the above-mentioned conventional drawbacks and it is an object of the present invention to provide a gear, a tooth-surface finish machining method and a tooth-surface finish machining device which exhibits the sufficient silence by reducing the generation of vibration and noises in actual use.

### Disclosure of the Invention

According to a first aspect of the present invention, in a method for performing a finish machining of a tooth surface of a gear to be machined, in a state that at least one counter gear is meshed with the above-mentioned gear to be machined, both gears are rotated while supplying water or an aqueous solution containing no abrasive grains to meshing portions of these gears thus obtaining a surface with a small surface roughness on the above-mentioned tooth surface of the above-mentioned gear to be machined.

The gist which should be noted most is, as described above, that both gears are rotated while supplying water or the aqueous solution to the meshing portions of the gear to be machined and the counter gear and the above-mentioned water or aqueous solution does not contain abrasive grains at all. Here, the supply of the above-mentioned water or aqueous solution is performed not only in the liquefied state but also in the gaseous state.

Any types of gears including a spur gear are applicable as the above-mentioned gear to be machined. Further, as the material of the gear to be machined, various kinds of materials such as ceramic are applicable besides metal material including carbon steel and alloy steel.

Subsequently, the manner of operation and advantageous effects are explained.

In the above-mentioned tooth-surface finish machining method, as mentioned above, at least one counter gear which can be meshed with the gear to be machined is prepared. Then, in the state that the counter gear is meshed with the gear to be machined, both gears are rotated while supplying water or the aqueous solution containing no abrasive grains to the meshing portions of both gears. Accordingly, compared to a case in which a conventional finish machining method is performed, the finish machining method of the present invention can obtain the remarkably excellent tooth surfaces of the gear to be machined. Further, the gear which is obtained by the method exhibits the smaller vibration and noises in actual use compared to the conventional gears thus realizing a gear which exhibits the sufficient silence.

The reason is as follows.

That is, by supplying the above-mentioned water or aqueous solution to the portion where the above-mentioned counter gear is meshed with the above-mentioned gear to be machined, the tooth surface of the gear to be machined is exposed to an atmosphere in which the tooth surface is more liable to be oxidized than in a case in which the tooth surface is exposed to air. Further, by rotating the gear to be machined and the counter gear, the tooth surfaces of the counter gear are sequentially brought into contact with each tooth surfaces of the gear to be machined the tooth surface and the sliding movement or the rolling movement is repeated.

Then, in the atmosphere in which the tooth surface of the gear to be machined is more liable to be oxidized than in the case in which the tooth surface is exposed to air, by applying the energy generated by the above-mentioned sliding movement or the rolling movement to the tooth surface of the gear to be machined, the oxidation of the surface of the tooth surface is accelerated and an oxide is removed. That is, a so-called mechano-chemical action is generated due to the sliding movement or the rolling movement applied to the above-mentioned tooth surface in a properly controlled manner. Accordingly, the tooth surface of the gear to be machined is improved into a state in which the tooth surface has the optimum shape and the optimum surface roughness in actual use.

Further, the above-mentioned water or aqueous solution does not contain the abrasive grains at all. Accordingly, the smoothness of the surface is not achieved by the grinding using the abrasive grains but by a mechanism which is comprised of the above-mentioned acceleration of oxidation and the removal of oxide. Therefore, on the tooth surface of the above-mentioned gear to be machined, grinding traces or the like which are generated when the tooth surface is ground by the abrasive grains are hardly generated. As a result, the tooth surface of the gear to be machined becomes a surface exhibiting an extremely small surface roughness compared to the tooth surface of the conventional gear to be machined.

Further, such excellent manner of operation and effect can be effectively achieved even when the gear to be machined is made of ceramic or other material besides metal such as carbon steel.

Then, according to a second aspect of the present invention, in a method for performing a finish machining of a tooth surface of a gear to be machined and tooth surfaces of other gears to be machined, in a state that at least one other gear to be machined is meshed with the above-mentioned gear to be machined, both gears are rotated while supplying water or an aqueous solution containing no abrasive grains to meshing portions of these gears thus obtaining a surface with a small surface roughness on the above-mentioned respective tooth surfaces of the above-mentioned gear to be machined and the above-mentioned other gear to be machined.

In this case, by performing the above-mentioned finish machining method in such a manner that a plurality of gears to be machined are combined with each other, respective tooth surfaces of a plurality of gears to be machined can be simultaneously subjected to the finish machining. Accordingly, the efficiency of the finish machining of the tooth surfaces of the gears to be machined can be enhanced.

Further, according to a third aspect of the present invention, with respect to a gear to which a finish machining of a tooth surface is applied to obtain a surface with a small surface roughness, the finish machining of the tooth surface of the gear is performed by the finish machining method of a tooth surface described in the first aspect of the above-mentioned present invention.

Since the gear has the tooth surface which is finish-machined by the above-mentioned finish-machining method, the gear which exhibits the silence with extremely small vibration and noises can be obtained.

Subsequently, according to a fourth aspect of the present invention, in a device for performing the finish-machining of a tooth surface of a gear to be machined, the device includes a first rotary shaft which rotatably supports the above-mentioned gear to be machined thereon, a second rotary shaft which rotatably supports a counter gear which can be meshed with the gear to be machined thereon, and a water supply unit which supplies water or an aqueous solution which does not contain abrasive grains to meshing portions between the above-mentioned gear to be machined and the above-mentioned counter gear, wherein the above-mentioned gear to be machined and the above-mentioned counter gear can be rotated while supplying the above-mentioned water and aqueous solution to the above-mentioned meshing portions.

With the use of the device, the above-mentioned excellent tooth-surface finish machining method can be easily performed so that the tooth surface of the gear can be easily finished to the excellent state.

That is, the gear to be machined and the counter gear are mounted on the above-mentioned first rotary shaft and second rotary shaft and are meshed with each other. Then, the above-mentioned first rotary shaft and second rotary shaft are rotated while supplying water or the aqueous solution to the meshing portions from the above-mentioned water supply unit. In this manner, the above-mentioned tooth-surface finish-machining method can be realized.

Here, although the rotation of the above-mentioned first rotary shaft and second rotary shaft may be performed such that both rotary shafts are driven, it is possible to adopt a method in which only one of the rotary shafts is driven.

Further, as the above-mentioned second rotary shafts, a plural sets of second rotary shafts can be provided and, in this case, a plurality of counter gears can be set.

### Brief Description of the Drawings

Fig. 1 is an explanatory view showing a tooth surface finish machining method according to an embodiment 1.
Fig. 2 is an explanatory view showing the condition of a tooth surface after the finish-machining in the embodiment 1.
Fig. 3(a) is a front view showing the constitution of a tooth-surface finish machining device in the embodiment 2.
Fig. 3(b) is a side view chowing the constitution of a tooth-surface finish machining device in the embodiment 2.
Fig. 4 is an explanatory view showing a surface roughness measurement chart in the tooth profile direction in the embodiment 3.
Fig. 5 is an explanatory view showing a surface roughness measurement chart in the tooth trace direction in the embodiment 3.
Fig. 6 is an explanatory view showing the surface roughness Rz in the embodiment 3.
Fig. 7 is an explanatory view showing a tooth-surface finish-machining method in a pair of planetary gears in an embodiment 4.
Fig. 8 is an explanatory view showing a structure of an automatic transmission axle in an embodiment 5.
Fig. 9 is an explanatory view showing a structure of a planetary gear couple in the embodiment 5.
Fig. 10 is an explanatory view showing a differential gear unit in the embodiment 5.
Fig. 11 is an explanatory view showing the relationship between the number of meshing and the vibration data in an experiment 1 of the embodiment 6.
Fig. 12 is an explanatory view showing the relationship between the number of meshing and the vibration data in an experiment 2 of the embodiment 6.
Fig. 13 is an explanatory view showing the vibration data before and after the finish machining treatment in an experiment 2 of the embodiment 6.
Fig. 14 is an explanatory view showing the relationship between the number of meshing and the vibration data in an experiment 3 of the embodiment 6.
Fig. 15 is an explanatory view showing the vibration data before and after the finish machining treatment in the experiment 3 of the embodiment 6.
Fig. 16 is an explanatory view showing the relationship between the number of meshing and the vibration data in an experiment 4 of the embodiment 6.
Fig. 17 is an explanatory view showing the relationship between the number of meshing and the vibration data in an experiment 5 of the embodiment 6.
Fig. 18 is an explanatory view showing the relationship between the number of meshing and the vibration data in an experiment 6 of the embodiment 6.
Fig. 19 is an explanatory view showing the vibration data before and after the finish-mounting treatment in the experiment 6 of the embodiment 6.

### Best Mode for Carrying out the Invention

In the above-mentioned first aspect of the present invention, it is preferable that the above-mentioned counter gear is an actual gear which is used in combination with the above-mentioned gear to be machined or a gear having the same profile with the gear to be machined in actual use. In this case, the tooth surface of the counter gear is also simultaneously finished to the optimum state with the tooth surface of the gear to be machined and hence, the manufacturing process of the gears can be made efficient. Further, although it is not always necessary to use the above-mentioned gear to be machined and the counter gear in the same combination in actual use, by using them in the same combination in actual use, the vibration and noises can be further suppressed.

Further, the above-mentioned counter gear may be a gear which exhibits the more excellent oxidation resistance than the above-mentioned gear to be machined. In this case, the above-mentioned counter gear can be used plural times as so-called master gear which becomes the reference so that the stability of the finished state of the gears to be machined can be enhanced.

Further, it is preferable to rotate the above-mentioned gear to be machined and the above-mentioned counter gear in the state that the pressure of equal to or more than 5 MPa is applied between the tooth surfaces of both gears which are brought into contact with each other in the meshing portions. When the above-mentioned pressure is below 5 MPa, there is a possibility that the oxidation promoting action of the tooth surface of the gear to be machined is reduced. On the other hand, when the pressure is excessively higher than the pressure in actual use, the tooth-surface finishing is performed in the state that a large deformation is generated on the gear and hence, the meshing displacement is generated in actual use. Further, when the gear made of metal material such as carbon steel or alloy steel is used, it is preferable to set the above-mentioned pressure to a value equal to or below the pressure in actual use from a viewpoint of the strength of the gear per se. For example, with respect to the gear made of alloy steel which is carbulized and quenched, it is preferable to set the pressure to equal to or less than 2000 MPa. Also when the present invention is applied to the gear made of material such as ceramic other than the metal material, the above-mentioned pressure is determined in view of the strength of the gear and the pressure in actual use in the same manner.

Further, it is preferable to set the surface roughness Rz of the tooth surface of the above-mentioned counter gear within a range of 0.5 to 10. When the surface roughness Rz of the counter gear is below 0.5, there arises a problem that the counter gear receives the large finishing action from the gear to be machined to the contrary and hence, the wear of the counter gear is increased. On the other hand, when the surface roughness Rz of the counter gear exceeds 10, there arises a problem that abrasive traces or the like are generated on the tooth surface of the gear to be machined due to a bulged portion of the tooth surface of the counter gear.

Further, the above-mentioned aqueous solution can contain at least one of fluorinated acid, nitric acid, oxalic acid, hydrogen peroxide, sulfuric acid, hydrochloric acid and sodium chloride. That is, although it may be sufficient to use only water as material to be supplied to the above-mentioned meshing portion, the aqueous solution which is produced by dissolving a given solute in water may be used. Here, as the solute to be dissolved in the aqueous solution, the above-mentioned various materials which enhance the oxidizability and the mixture of these materials may be used. In this case, these materials can enhance the oxidation promoting action due to the sliding and the rolling on the above-mentioned tooth surface whereby the finish machining time can be shortened.

Further, the above-mentioned gear to be machined and the above-mentioned counter gear can be meshed with each other in the state that their axial directions are arranged parallel to each other and, at the same time, these gears can be rotated while performing the relative reciprocating movement of these gears in the axial direction. In this case, the sliding movement given in the tooth trace direction of the tooth surface can be increased by the above-mentioned reciprocating movement so that the oxidation promoting action can be enhanced.

Further, the above-mentioned gear to be machined and the above-mentioned counter gear can he meshed with each other in the state that their axial directions are arranged parallel to each other and, at the same time, these gears can be rotated while repeating the expansion and the narrowing of the distance between the axes of the gears. In this case, by repeating the expansion and the narrowing of the distance between the axes of the gears, the sliding movement given in the tooth profile direction of the tooth surface can be increased so that the oxidation promoting action can be enhanced.

Further, the above-mentioned gear to be machined and the above-mentioned counter gear can be meshed with each other in the state that their axial directions are arranged parallel to each other and, at the same time, these gears can be rotated in the state that at least one axis is reciprocably tilted with respect to the other axis at a given angle from the parallel state. Also in this case, by the above-mentioned reciprocating tilting, the sliding movement given in the tooth profile direction of the tooth surface can be increased so that the oxidation promoting action can be enhanced.

Further, the above-mentioned gear to be machined and the above-mentioned counter gear can be rotated with axial directions thereof intersected at an approximately right angle from each other. That is, in this case, even when the gear to be machined is a bevel gear, a hypoid gear or the like, the above-mentioned excellent finish machining method can be performed on the gear thus performing the excellent finishing of the tooth surface.

Further, the above-mentioned gear to be machined and the above-mentioned counter gear can be also rotated while relatively moving the contact position where these gears are meshed with each other. In this case, it is possible to positively control the profile of the tooth surface to be subjected to the finish machining.

Further, it is preferable to perform the meshing of the above-mentioned gear to be machined and the above-mentioned counter gear 10000 to 20000 times. When the number of meshing of the gear to be machined and the counter gear is less than 10000 times, there is a fear that the machining is finished in the state that the finish machining of the tooth surface has not yet sufficiently progressed. On the other hand, when the number of meshing of the gear to be machined and the counter gear exceeds 20000 times, there is a fear that the condition of the tooth surface is worsened exceeding the optimum condition.

Further, it is preferable to perform the above-mentioned rotation while measuring the vibration and noises of the above-mentioned gear to be machined and to finish the above-mentioned rotation based on the measured value of the vibration or noises. In this case, the condition of the tooth surface of the gear to be machined can be properly quantitively judged based on the measured value of the vibration and the measured value of the noises and hence, the period in which the rotation is performed, that is, the machining period can be properly judged. As a method which judges that the measured value of vibration and noises has reached the optimum condition, various methods are applicable.

For example, the above-mentioned measurement of the vibration and noises can be continuously performed at fixed or unfixed time intervals and the above-mentioned rotation can be finished at a point of time that the obtained measured value becomes smaller than a given value. The above-mentioned given value in such a case can be determined based on the relationship between the optimum machining condition and the measured value of the vibration or noises by empirically performing the finish machining of the above-mentioned gear to be machined, for example.

Further, the above-mentioned measurement of the vibration and noises can be continuously performed at fixed or unfixed time intervals and the above-mentioned rotation can be also finished at a point of time that the obtained measured value is increased three or more times continuously. This implies that a point of inflection of the measured value of the above-mentioned vibration or noises is judged based on the above-mentioned increase of the measured value which occurs three or more times continuously and this point of time is judged as a point of time when the optimum machining is completed.

Further, it may be possible that the above-mentioned measurement of the vibration and noises is performed continuously at fixed or unfixed time intervals, an approximation formula (aX + b) which describes the change of the obtained time-sequential measured value along time X is obtained, and the above-mentioned rotation can be finished at a point of time that a gradient a of the approximation formula is changed from negative to positive. This implies that the point of inflection of the above-mentioned measured value of vibration or noises is judged based on the gradient of the above-mentioned approximation formula, and this point of time is judged as a point of time that the optimum machining is completed.

Further, it may be considered that the number of meshing, the finishing time and the like which can suppress the vibration and noises which are caused by the meshing to given values are obtained in a preliminary experiment or the like and the machining is also performed based on the obtained number of meshing and finishing time. Further, focusing on the surface roughness of the tooth surface, it is possible that the number of meshing and the finishing time which can obtain the desired roughness are preliminarily obtained and then the machining is performed based on these obtained values.

In this case, it is possible to perform the finish machining in such a way that the vibration or noises become given values or the surface roughness of the tooth surface becomes a given value by the machining based on the above-mentioned number of meshing or the finishing time even if the vibration, noises or the surface roughness of the tooth surface is not directly measured.

With the use of any one of the above-mentioned judging methods, the point of time that the machining is finished can be judged based on the measured values of noises or vibration. Further, it is needless to say that judging methods other than the above-exemplified methods can be adopted.

Further, in a finish machining device of a fourth aspect of the present invention, it is preferable that a liquid reservoir portion which receives the above-mentioned water or aqueous solution is disposed below the above-mentioned gear to be machined and the above-mentioned counter gear and, at the same time, the finish machining device includes liquid circulation means which filters the water or the aqueous solution which is reserved in the liquid reservoir and again supplies the above-mentioned water or aqueous solution to the above-mentioned meshing portion. In this case, the water or the aqueous solution can be used in a circulating manner so that the reduction of the resource consumption and the reduction of the manufacturing cost can be achieved.

Further, it is preferable that the finish machining device includes torque adjustment means which applies a given pressure between contacting tooth surfaces which are brought into contact with each other in the meshing portions of the above-mentioned gear to be meshed and the above mentioned counter gear. In this case, it is possible to apply an optimum pressure to respective gears. As such torque adjustment means, a method which controls torque by respectively mounting motors on the above-mentioned first rotary shaft and the above-mentioned second rotary shaft, a method which mounts a motor on one of these rotary shafts and mounts a resistance device which generates a rotational resistance on the other rotary shaft and the like can be used.

Further, in the above-mentioned tooth-surface finish machining device, it is also possible to perform the relative reciprocal movement between the above-mentioned first rotary shaft and the above-mentioned second rotary shaft. For example, it is possible to arrange the axial directions of these gears in parallel from each other and to perform the relative reciprocal movement in the axial direction. Still further, it is possible to arrange the axial directions of these gears in parallel from each other and to perform the expansion and the narrowing of the distance between the axes of the gears. Still further, it is possible to arrange the axial directions of these gears in parallel from each other and to perform the reciprocal tilting at a given angle from the parallel condition.

In such a case, it is possible to give the change to the sliding movement applied to the tooth surface of the above-mentioned gear to be machined and to increase such a change.

Further, it is possible to arrange the gears in such a way that the axial directions of the gears intersect each other at an approximately right angle.

Still further, it is preferable that the above-mentioned tooth-surface finish machining device includes rotary shaft moving means which allows the relative movement between the above-mentioned first rotary shaft and the above-mentioned second rotary shaft in such a way that the contact position at the meshing portions of the above-mentioned gear to be machined and the above-mentioned counter gear can be changed. In this manner, with the provision of the above-mentioned rotary moving means, the above-mentioned reciprocal movement or the like can be easily performed and, at the same time, the profile of the tooth surface which is subjected to the finish machining can be positively controlled.

### Embodiment 1

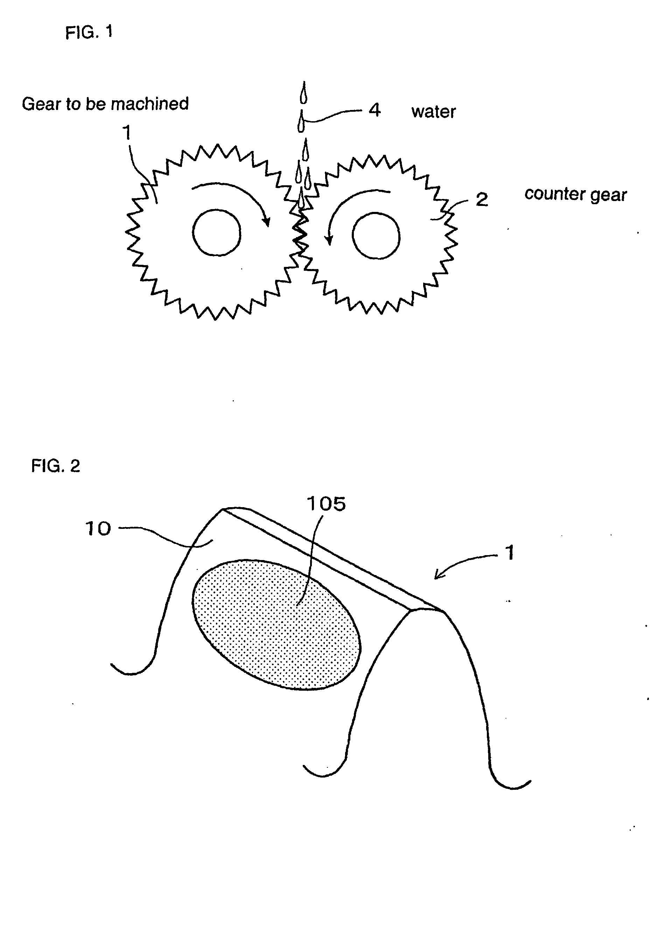

A gear according to an embodiment of the present invention and a method for performing a finish-machining of a tooth surface of the gear are explained in conjunction with Fig. 1.

In this embodiment, as a gear 1 to be machined, a helical gear for an automatic transmission of an automobile was prepared and a tooth surface of the gear was subjected to the finish machining.

As a counter gear 2, a helical gear constituting an actual gear which can be used in combination with the gear 1 to be machined in actual use was prepared. Both of these gear are made of alloy steel and were formed by molding through a forging and cutting step, a shaving step and a carburizing and quenching step.

In performing the finish machining of the tooth surface of the above-mentioned gear 1 to be machined, as shown in Fig. 1, the gear 1 to be machined and the counter gear 2 were meshed with each other. Then, both gears 1, 2 were rotated while supplying water 4 which contains no abrasive grains to meshing portions of these gears.

In this example, the rotational speed in such a rotation was set to 500 rpm and the pressure applied between tooth surfaces of both gears which are brought into contact with each other at the meshing portions was set to 250 MPa.

Further, the supply of the above-mentioned water 4 was performed in a liquefied form at a room temperature and was continuously supplied at a rate of 500 cc/min in such a way that the tooth surfaces of the above-mentioned meshing portion became sufficiently wet.

Then, the above-mentioned finish machining was performed for approximately 4 hours and the performance of the gears was evaluated.

The evaluation was performed in such way that the meshing vibration was measured on a finish machining device so as to confirm a vibration attenuation effect and, at the same time, gear noises which were generated when the above-mentioned gear 1 to be machined and counter gear 2 were actually incorporated into a transmission and were rotated were measured. Further, for a comparison purpose, the measurement was performed in the same manner before performing the above-mentioned finish machining. The result is shown in Table 1.

**(Table 1)**

| Evaluation item | Before finish machining | After finish machining | effect |
|---|---|---|---|
| Gear noises | 93.9 dB | 83.5 dB | Reduction by 11 % |
| Meshing vibration | 43 dB | 23 dB | Reduction by 47 % |

As can be understood from Table 1, it is understood that the gear 1 to be machined of this embodiment which was subjected to the finish machining of the tooth surface became a gear which exhibits the sufficient silence with small vibration and noises in actual use.

The reason why the above effect was obtained is as follows as described above.

That is, by supplying water 4 to a portion where the counter gear 2 was meshed with the gear 1 to be machined, the tooth surface of the gear 1 to be machined was exposed to an atmosphere in which the tooth surface is more liable to be oxidized than in a case in which the tooth surface was exposed to air. Further, by rotating the gear 1 to be machined and the counter gear 2, the tooth surface of the counter gear 2 was sequentially brought into contact with respective tooth surfaces of the gear 1 to be machined and the sliding and the rolling movement were repeated.

Accordingly, with respect to a front surface of the tooth surface, the oxidation of a portion which adversely influences the vibration or the like was promoted and an oxide was removed. Accordingly, the tooth surface of the gear 1 to be machined is improved to the state having the optimum shape and surface roughness in actual use.

Further, since water 4 includes no abrasive grains at all, the abrasive traces or the like which were generated in grinding using the abrasive grains are hardly generated. Accordingly, as shown in Fig. 2, a central portion 105 of the tooth surface 10 of the gear 1 to be machined became a mirror-surface state and constituted a surface which exhibits an extremely small surface roughness compared with the tooth surface of the conventional gear.

Due to such a constitution, the above-mentioned gear 1 to be machined exhibited the sufficient silence with small vibration and noises.

Although water was supplied to the tooth surface by dropping water in the above-mentioned embodiment, water may be supplied by immersing the tooth surface of at least one gear in water.

Further, with respect to the above-mentioned gear 1 to be machined, upon completion of the above-mentioned finish machining, the gear 1 to be machined was held in the atmosphere of the equal to or more than 100 degree centrigrade or an operation to spray air using an air gun or the like onto the gear 1 to be machined was performed. Accordingly, water 4 which was adhered to the surface of the gear 1 to be machined was removed thus preventing the generation of rust on the gear 1 to be machined.

When an aqueous solution of high oxidizability is used in place of water 4, it is preferable to remove water after performing the sufficient water cleaning.

Further, when it is necessary to prevent the generation of rust for a long period, a rust preventive oil, a lubricant and the like may be coated on the gear.

### Embodiment 2

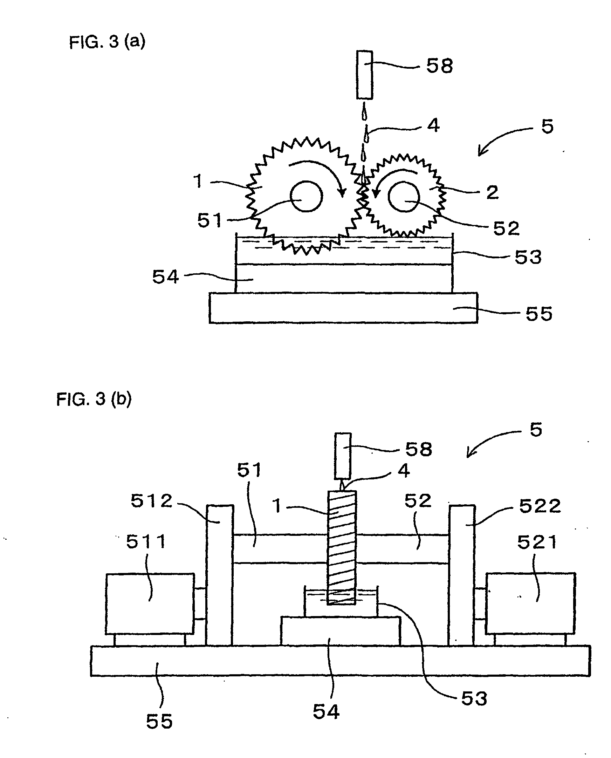

In this embodiment, a device for carrying out the embodiment 1, that is, a device for performing the finish machining of a tooth surface of a gear is simply explained in conjunction with Fig. 3.

The device 5 according to this embodiment includes, as shown in the drawing, a first rotary shaft 51 which rotatably supports the gear 1 to be machined thereon, a second rotary shaft 52 which rotatably supports the counter gear 2 which can be meshed with the gear 1 to be machined thereon, and water supply means 58 which supplies water 4 containing no abrasive grains to meshing portions of the above-mentioned gear 1 to be machined and the above-mentioned counter gear 1. Further, the finish machining device is constituted so that the gear 1 to be machined and the counter gear 2 can be rotated while supplying water 4 to the meshing portions.

The above-mentioned first rotary shaft 51 is, as shown in the drawing, connected with an input motor 511 by way of a transmission 512 and is configured to fix the above-mentioned gear 1 to be machined to a distal end thereof. Further, the above-mentioned second rotary shaft 52 is connected with an output motor 521 by way of a transmission 522 and is configured to fix the above-mentioned counter gear 2 to a distal end thereof. Then, in this embodiment, the torque control of the above-mentioned input motor 511 and output motor 512 is performed by a control part not shown in the drawing so as to apply a given pressure between the contacting tooth surfaces of the gear 1 to be machined and the counter gear 2.

Further, as shown in the drawing, the liquid reservoir portion 53 which receives water 4 is disposed below the gear 1 to be machined and the counter gear 2. It is arranged that water 4 stored in the liquid reservoir portion 53 is filtered with a filter device 54 and is again supplied to the above-mentioned water supply means 58. Here, the above-mentioned water supply means 58 is constituted of a nozzle whose dropping quantity is adjustable and is fixed to a housing not shown in the drawing.

Using the tooth-surface finish machining device 5 having such a constitution, the finish machining method of the embodiment 1 can be easily carried out.

### Embodiment 3

In this embodiment, to clarify the advantageous effect of the embodiment 1, the effect is compared with that of conventional finish machining methods.

As the conventional finish machining methods, four kinds of methods were carried out.

The first method is a method which performs a carburizing and quenching after performing a shaving (referred to as SV-HT), the second method is a method which finishes a tooth surface by a burnishing machining (referred to as "burnishing"), the third method is a method which finishes a tooth surface by a honing machining (referred to as HO), and the fourth method is a method which finishes a tooth surface by grinding (referred to as GR).

Then, the surface roughness of the tooth surfaces of the gears whose tooth surfaces were finished using such four kinds of methods and the surface roughness of the tooth surfaces of the gear whose tooth surface was finished by the embodiment 1 (present invention) were measured and compared. Here, the present invention was applied to a honeycomb structural body whose tooth surface is finished by SV-HT.

The measurement of the surface roughness was performed in the tooth profile direction as well as in the tooth trace direction on the tooth surface. Each surface roughness measurement was performed while setting the reference length to 0.8 mm. Further, the measuring portion in the tooth trace direction was set in such a way that a center point from both end portions of the tooth on a pitch circle became a measuring start point. Further, the measuring portion in the tooth profile direction was set in such a way that a root-side point which is a center portion from both end portions of the tooth and 0.4 mm away from a pitch point became a measuring start point. Here, the tooth profile direction is a direction which is directed to a tip side from the root side and the tooth trace direction is a direction which is perpendicular to the profile trace direction.

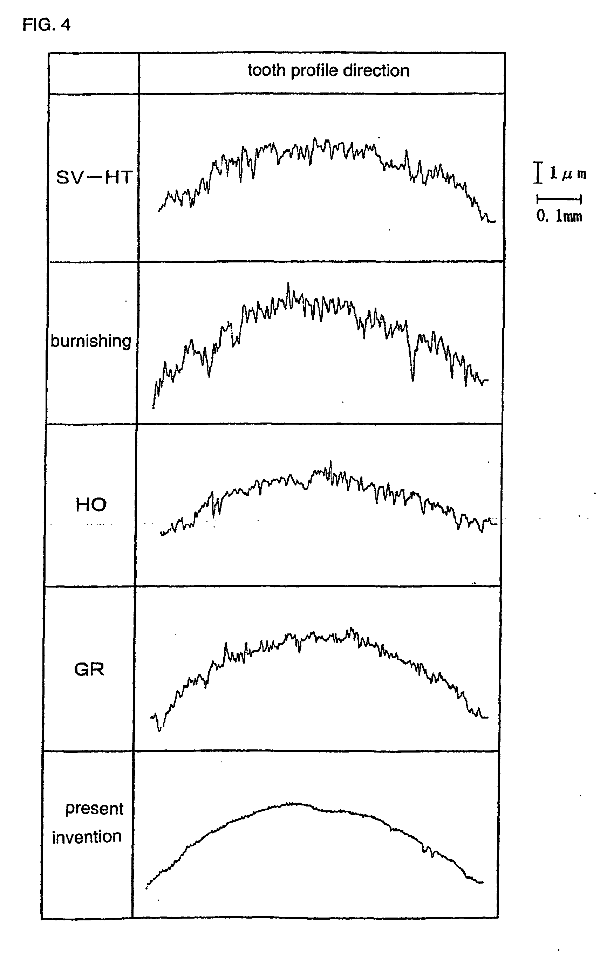

The measured result of the surface roughness of the tooth surface is shown in Fig. 4 to Fig. 6.

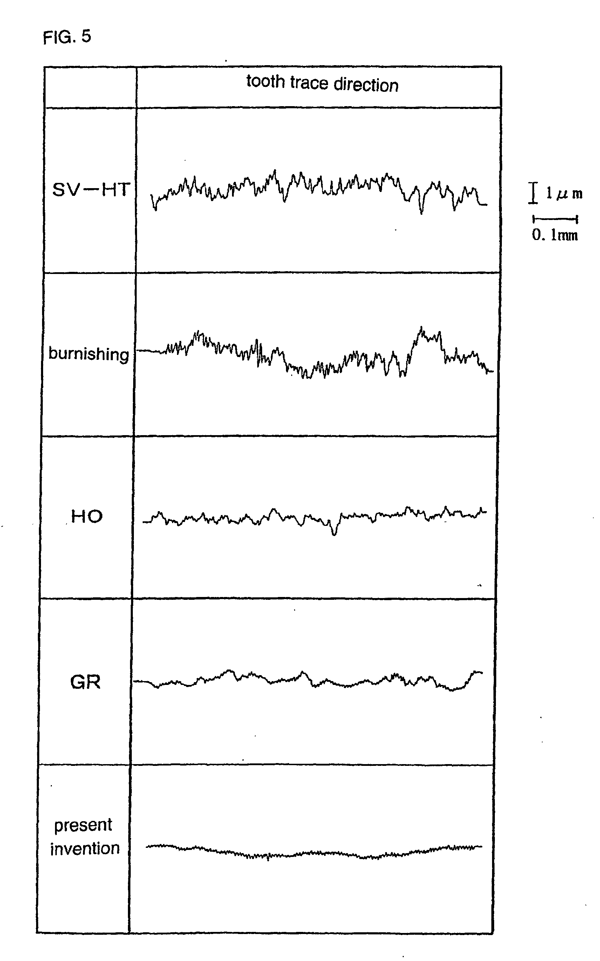

Fig. 4 and Fig. 5 respectively show measurement charts of surface roughness in the tooth profile direction and in the tooth trace direction, wherein an axis of abscissas indicates the measured position and an axis of ordinates indicates irregularities.

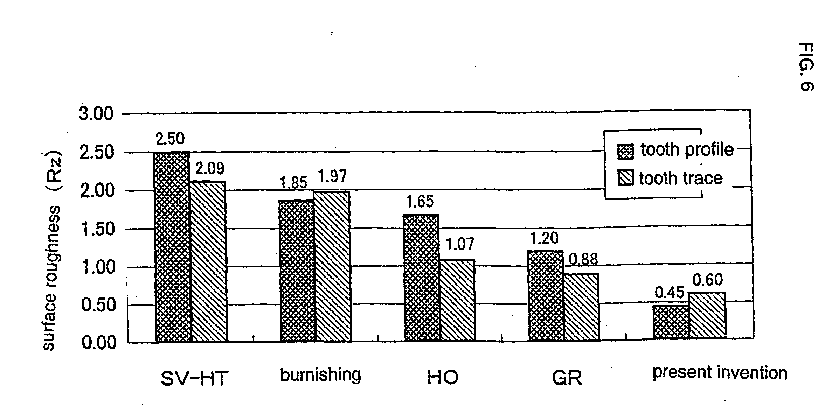

Fig. 6 takes kinds of gear on an axis of abscissas and takes the surface roughness Rz in the tooth profile direction and in the tooth trace direction on an axis of ordinates respectively.

First of all, as can be understood from Fig. 4 and Fig. 5, compared with any one of other cases, a product of the present invention exhibited the extremely small irregularities in the up and down directions and hence, it is appreciated that the tooth surface was extremely smoothly finished. Further, as can be understood from Fig. 6, it is appreciated that the value of surface roughness Rz also took the minimum value.

Based on the above result, it is appreciated that the tooth surface of the gear which was subjected to the finish machining by the method of the present invention can be finished smoother than the tooth surface of the gear by the conventional methods. Since such an excellent tooth surface can be obtained, the large reduction of noises and vibration which has been explained in conjunction with the embodiment 1 can be realized. Further, since the favorable contact markings can be obtained, the surface pressure of the tooth surface can be reduced so that the tooth surface strength is enhanced thus prolonging the durability of the gear.

### Embodiment 4

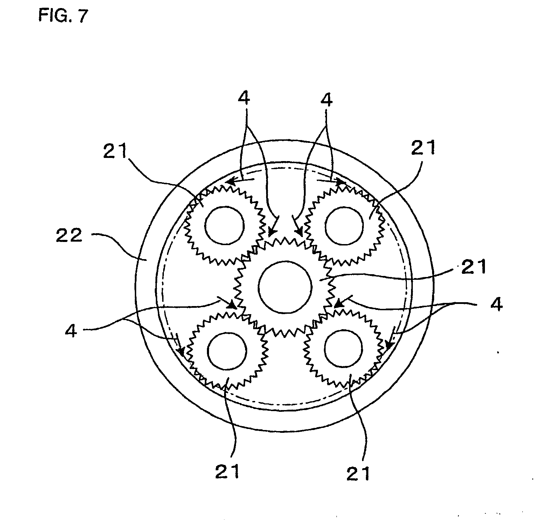

This embodiment relates to a case in which one of planetary gears constituted a gear 1 to be machined. That is, as shown in Fig. 7, a gear which was positioned at the center of a planetary gear couple was adopted as the gear 1 to be machined and four sets of counter gears 21 were are arranged around the gear 1. Further, a gear 22 which can be meshed with four counter gears 21 was arranged around four counter gears 21 and these gears were rotated. Here, water 4 continued to be supplied to meshing portions of respective gears using a nozzle.

In this embodiment, actual gears were used as all gears.

Also in this embodiment, as in the case of the embodiment 1, tooth surfaces of the gear 1 to be machined, the counter gears 21 and the gear 22 were finished to surfaces which exhibited an extremely small surface roughness.

With respect to other constitutions, the embodiment can obtain the manner of operation and advantageous effects similar to those obtained by the first embodiment.

### Embodiment 5

This embodiment shows a specific example of a gear which can perform a finish machining method similar to that of the embodiment 1.

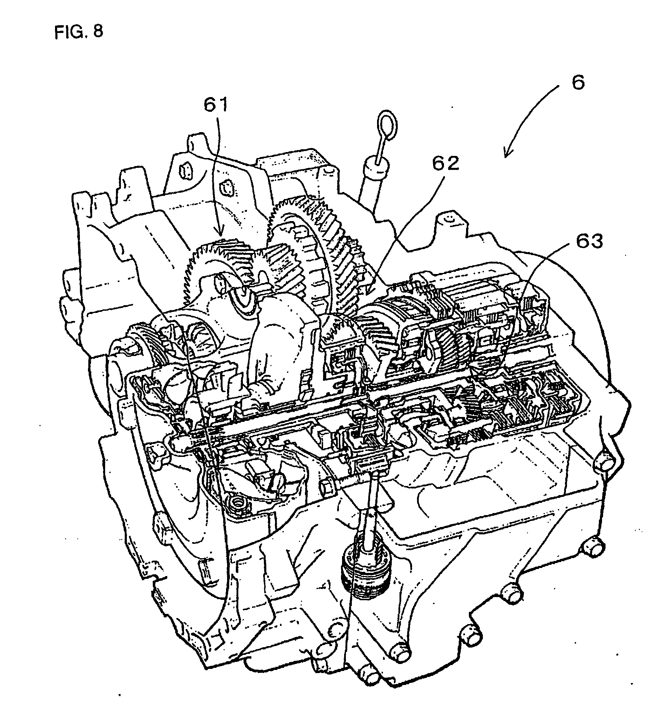

Fig. 8 shows a structure of an automatic transmission axle, wherein various kinds of gears assembled in the axle are shown. As kinds of gears, for examples, helical gears in gear couples 61, 62 and respective gears in planetary gear couples 63 are named.

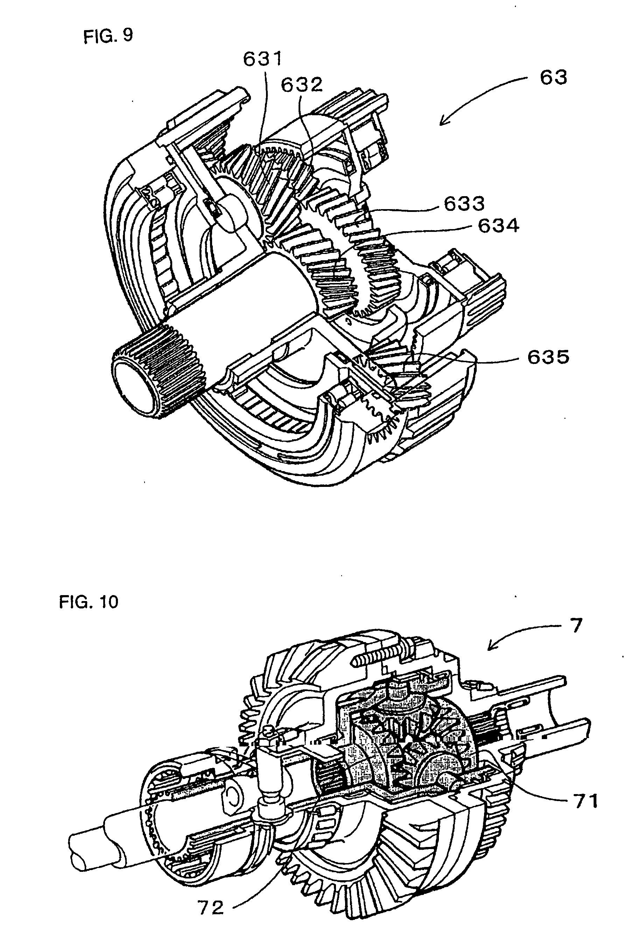

Fig. 9 shows the detail of the planetary gear couple 63. As can be understood from the drawing, also in a set of planetary gear couple 63, a large number of gears represented by gears 631 to 635 are used.

Fig. 10 shows a structure of a differential gear unit 7. As can be understood from the drawing, also in the differential gear unit 7, a large number of gears including a center differential right-side gear 71 and a center differential left-side gear 72 are assembled.

The finish machining method similar to that of the embodiment 1 can be applicable to all these gears. Further, by using actual gears as the above-mentioned counter gears, a plurality of gears can be simultaneously subjected to the finish machining thus the gear manufacturing steps can be made efficient. Further, among various advantageous effects, it is possible to obtain a particularly remarkable advantageous effect that a mechanical device such as the above-mentioned automatic transmission axle 6 or differential gear unit 7 in which the gears which are finished by applying the tooth surface finish machining method of the present invention are incorporated turns out to be, as a whole, a device which exhibits the silence with small noises and vibration.

### Embodiment 6

In this embodiment, an example which uses a device 5 similar to that of the embodiment 2 and performs a tooth-surface finish machining method while measuring the vibration of a gear to be machined is explained.

To be more specific, as will be explained hereinafter, a plural experiments in which gears to be machined which were formed of helical gears in the same manner as the embodiment 1 were subjected to a tooth-surface finish machining method while measuring the vibration using a FET analyzer were performed. (Experiment 1)

In the experiment 1, a gear to be machined and a counter gear were meshed with each other and both gears were rotated for 60 minutes while supplying water to the meshing portions of the gear to be machined and the counter gear in the state that a load of 22 Nm was applied in such a way that the load was applied to the tooth surfaces of both gears and the rotational speed of the gear to be machined was set to 500 rpm. Then, while the rotation was being performed, the vibration of the gear to be machined was measured at fixed intervals using the FFT analyzer as the primary vibration data and the secondary vibration data.

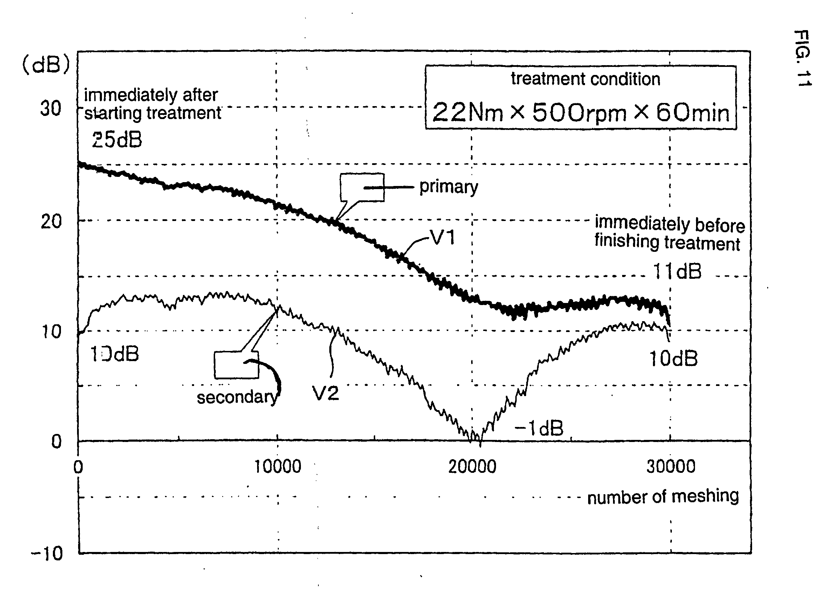

The result of the experiment is shown in Fig. 11. In the drawing, the number of meshing is taken on an axis of abscissa and the vibration (dB) is taken on an axis of ordinates, wherein primary vibration data is indicated by a bold line V1 and secondary vibration data is indicated by a thin line V2.

As can be understood from the drawing, in the experiment 1, it was found that when the number of meshing reached 20000 times, both of the primary vibration data and the secondary vibration data were decreased and, thereafter, they had a tendency to be increased again.

### (Experiment 2)

Subsequently, in the experiment 2, based on the result of the experiment 1, the treatment was performed under the same condition as the experiment 1 and the rotation of the gear to be machined and the counter gear was finished at a point of time that the number of meshing reached 18000 times. Then, the change of vibration of the gear to be machined before and after the treatment was measured. The measurement of the change of the vibration was performed on the condition which can easily generate the vibration by setting the load to the tooth surface to 22 Nm and the rotational speed to 1444 rpm.

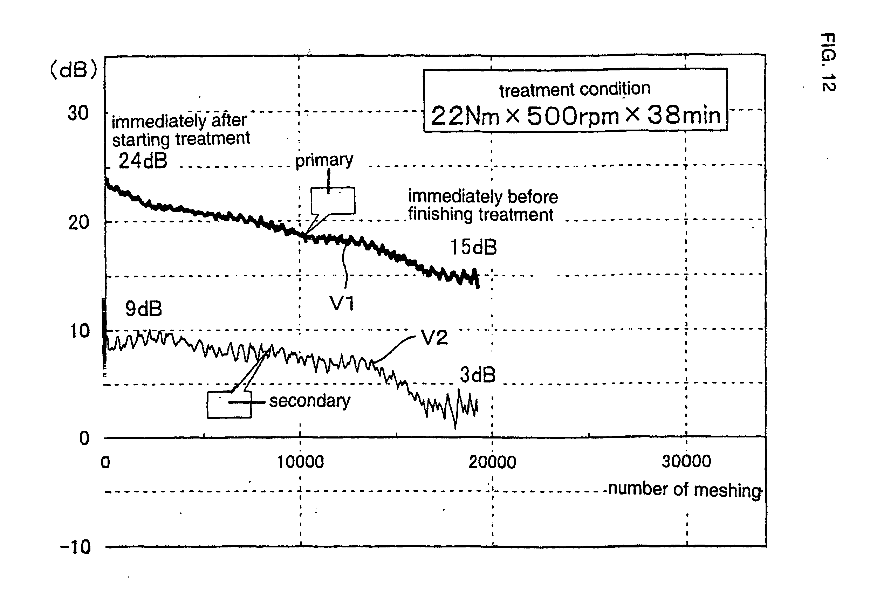

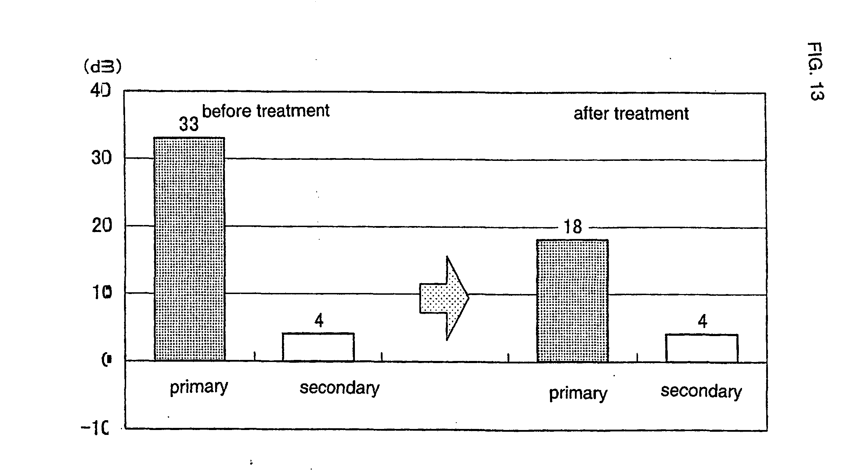

The result of the experiment 2 is shown in Fig. 12 and Fig. 13. An axis of abscissa and an axis of ordinates in Fig. 12 are taken in the same manner as those in Fig. 11. In Fig. 13, the distinction between the primary data and the secondary data before and after the treatment is taken on an axis of abscissa and the vibration (dB) is taken on an axis of ordinates.

First of all, as can be understood from Fig. 12, corresponding to the increase of the number of meshing, both of the primary vibration data and the secondary vibration data were decreased and this tendency was continued until the number of meshing reached 18000 times.

Subsequently, as can be understood from Fig. 13, by comparing the vibration data which were measured before and after the above-mentioned treatment, the first data was largely decreased. Accordingly, it was found that the above-mentioned finish machining treatment was extremely effective.

### (Experiment 3)

Subsequently, in the experiment 3, in the same manner as the experiment 2, when the number of meshing reached 10000 times, the rotation of the gears was finished. Then, the change of vibration of the gear to be machined before and after the treatment was measured. The condition for the measurement of the change of the vibration was also as same as that of the experiment 2. Further, in the experiment 3, before and after the finish machining treatment, the gear to be machined was actually incorporated into an automatic transmission, was served in operation and then the gear noises were measured. With respect to the condition for the rotation of the gear to be machined at this point of time, in the same manner as the above-mentioned measurement of the change of the vibration, the load applied to the tooth surface was set to 22 Nm and the rotational speed was set to 1444 rpm.

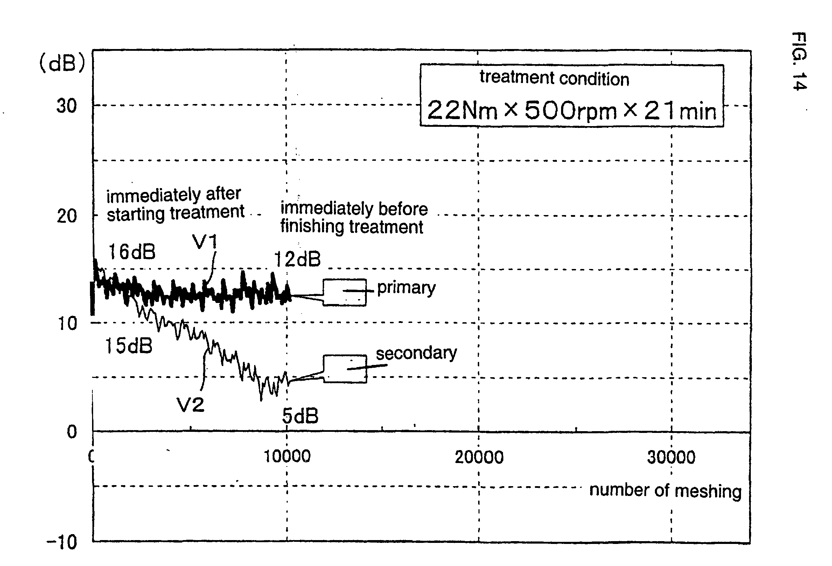

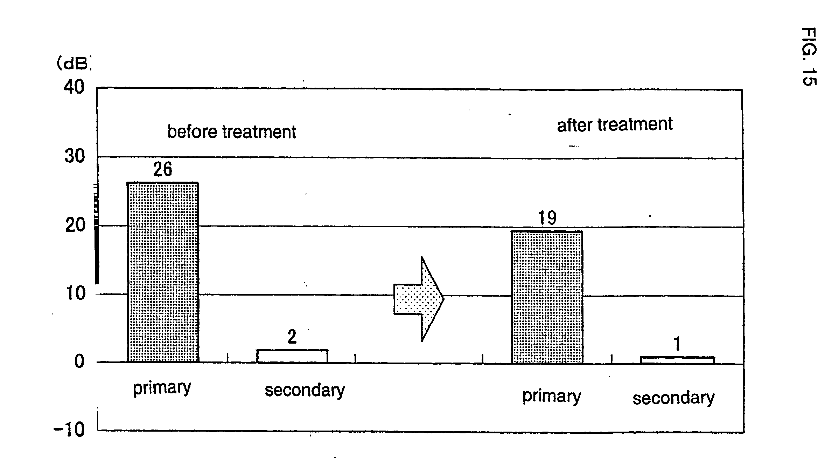

The result of the experiment 3 is shown in Fig. 14 and Fig. 15. Axes of ordinates in Fig. 14 and Fig. 15 or the like are respectively similar to those of Fig. 11 and Fig. 13.

First of all, as can be understood from Fig. 14, corresponding to the increase of the number of meshing, both of the primary vibration data and the secondary vibration data were decreased and this tendency was continued until the number of meshing reached 10000 times.

Subsequently, as can be understood from Fig. 15, by comparing the vibration data which was measured before and after the above-mentioned treatment, the first data was largely decreased. Accordingly, it was found that the above-mentioned finish machining treatment was extremely effective even when the number of meshing was 10000 times.

The result of the primary vibration data (dB) and the secondary vibration data (dB) of gear noises measured in the state that the gear to be machined was actually incorporated into an automatic transmission are shown in Table 2.

**(Table 2)**

| Evaluation item | Before finish machining | After finish machining | Advantageous effect |
|---|---|---|---|
| Gear noises | 95.0 dB | 86.9 dB | Reduction by 9 % |

As can be understood from Table 2, it was found that by using the gear to be machined which was subjected to the above-mentioned finish machining, the gear noises generated from the whole automatic transmission can be reduced.

### (Embodiment 4)

In the embodiment 4, an example in which an experiment similar to the experiment 1 was performed by increasing a load applied to a tooth surface to 60 Nm. Other conditions are similar to those of the experiment 1.

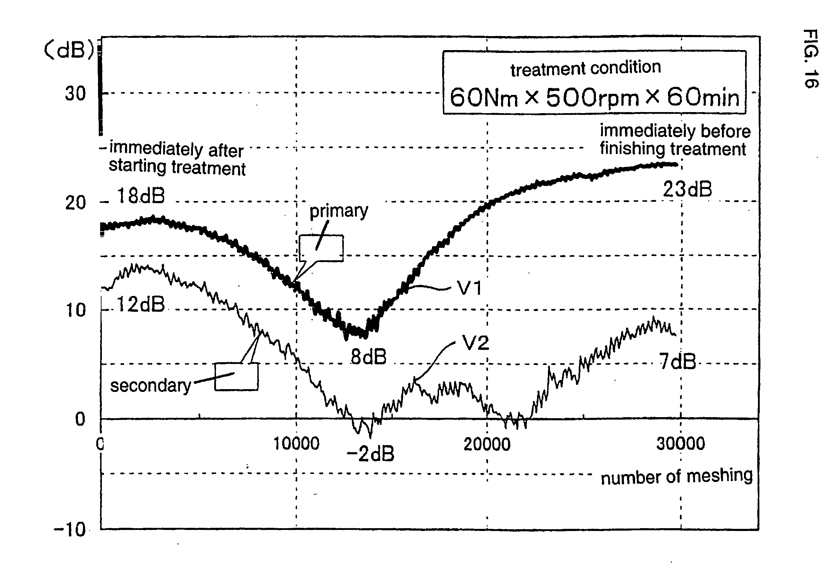

The result of the experiment is shown in Fig. 16. An axis of ordinates of the drawing is similar to the axis of ordinates of Fig. 11.

As can be understood from the drawing, in the experiment 4, it was found that when the number of meshing reached approximately 13000 times, both of the primary vibration data and the secondary vibration data were decreased and, thereafter, they showed a tendency to be increased again.

### (Experiment 5)

Subsequently, in the experiment 5, based on the result of the experiment 4, the treatment was performed under the same condition as the experiment 4 and the rotation of the gear to be machined and the counter gear was finished at a point of time that the number of meshing reached 13000 times.

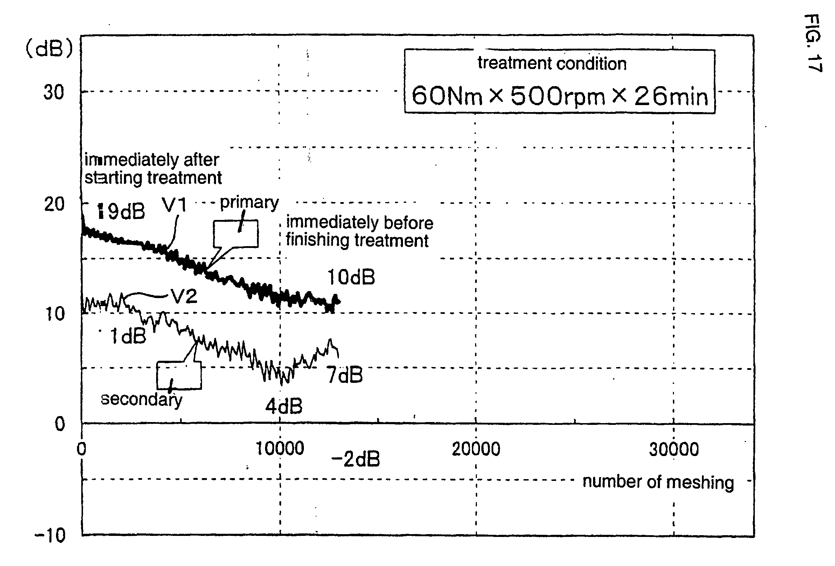

The result of the experiment 5 is shown in Fig. 17. An axis of abscissa and an axis of ordinates in Fig. 17 are respectively similar to those of Fig. 11.

As can be understood from Fig. 17, corresponding to the increase of the number of meshing, the primary vibration data was decreased and this tendency was continued until the number of meshing reached 13000 times. Further, although the secondary vibration data continued to be decreased until the number of meshing reached approximately 10000 times, the secondary vibration data was increased thereafter.

From the above result, in this example, it was considered optimum to finish the treatment substantially when the number of meshing exceeded approximately 10000 times.

### (Experiment 6)

The experiment 6 is an example in which an experiment similar to the experiment 1 was performed in such a way that the finish machining was performed by changing the rotational speed of a gear to be machined to 5800 rpm, that is, by increasing the sliding speed on the tooth surface and thus increasing the number of meshing to 1300 times. The other conditions are similar to those of the experiment 1. Here, only the primary data was measured as the vibration data.

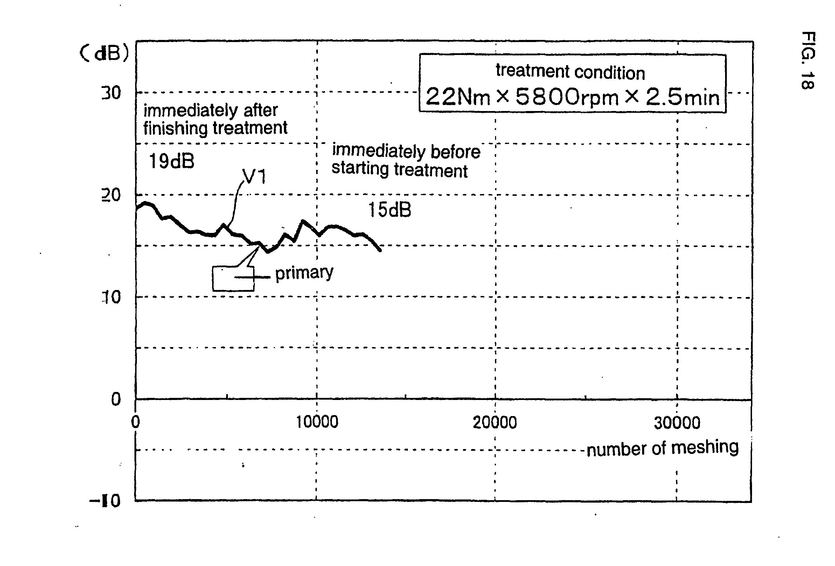

The result of the experiment is shown in Fig. 18. An axis of ordinates and the like of the drawing are similar to those of Fig. 11.

As can be understood from the drawing, also in the experiment 6, corresponding to the increase of the number of meshing, the primary vibration data was decreased.

Further, in this experiment, in the same manner as the experiment 2, the change of the vibration of the gear to be machined before and after the finish machining treatment was measured. With respect to the condition for measurement of the change of the vibration, in the same manner as the above experiment, a load applied to a tooth surface was set to 22 Nm and the rotational speed was set to 1444 rpm.

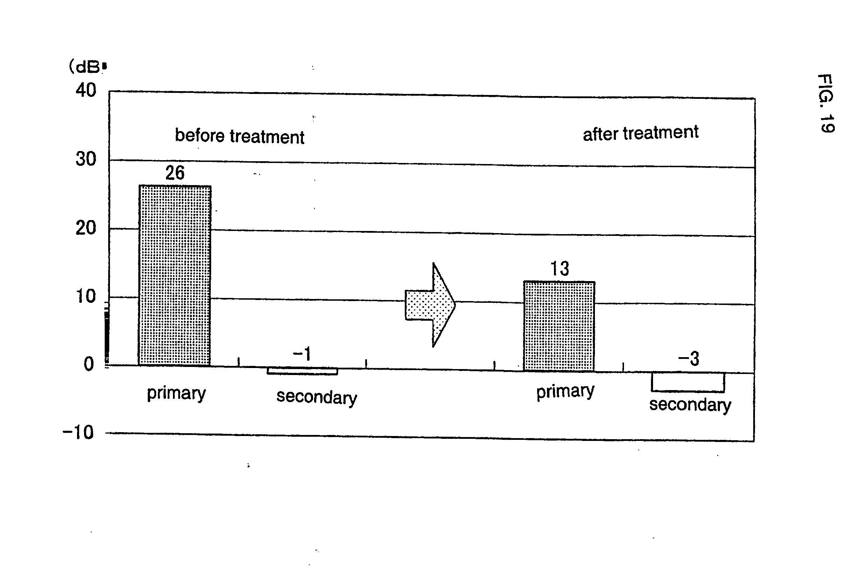

As can be understood from Fig. 19, since the primary data measured before and after the above-mentioned treatment was largely decreased before and after the above-mentioned treatment, it is found that even when the rotational speed is increased, the above-mentioned finish machining treatment is extremely effective.

Here, although the above-mentioned respective embodiments have been explained while taking the gear to be machined which is made of steel as an example, the above-mentioned excellent manner of operation and advantageous effects can be effectively achieved even when the above-mentioned gear 1 to be machined is made of ceramic or other material besides metal such as carbon steel. Further, when the above-mentioned gear to be machined is made of ceramic, copper or the like, for example, although hydroxide is generated in place of the generation of the above-mentioned oxide, it is considered that the oxidation which removes electrons from atoms of the material is generated.

### Industrial Applicability

As has been described heretofore, according to the present invention, it is possible to provide the gear which exhibits sufficient silence with small vibration and noises in actual use and the method and the apparatus for performing the finish machining of the tooth surface of the gear.

## Claims

1. A method for performing a finish machining of a tooth surface of a gear to be machined being **characterized in that** in the state that at least one counter gear is meshed with said gear to be machined, said gears are rotated while supplying water or an aqueous solution containing no abrasive grains to meshing portions of said gears whereby a surface with small surface roughness is formed on said tooth surface of said gear to be machined.

2. A method for performing a finish machining of a tooth surface according to claim 1, wherein said counter gear is actual gear which is used in combination with said gear to be machined or a gear having the same profile as said gear to be machined in actual use.

3. A method for performing a finish machining of a tooth surface according to claim 1, wherein said counter gear exhibits more excellent oxidizability than said gear to be machined.

4. A method for performing a finish machining of a tooth surface according to claim 1, wherein said gear to be machined and said counter gear are rotated in the state that a pressure of equal to or mere than 5 Pa is applied between tooth surfaces of said both gears which are brought into contact with each other at meshing portions.

5. A method for performing a finish machining of a tooth surface according to claim 1, wherein said tooth surface of said counter gear has a surface roughness Rz which falls in a range of 0.5 to 10.

6. A method for performing a finish machining of a tooth surface according to claim 1, wherein said aqueous solution contains at least one of fluorinated acid, nitric acid, oxalic acid, hydrogen peroxide, sulfuric acid, hydrochloric acid and sodium chloride.

7. A method for performing a finish machining of a tooth surface according to claim 1, wherein said gear to be machined and said counter gear are meshed with each other while having axes of said both gears arranged in parallel and are rotated while performing the relative reciprocating movement in the axial direction.

8. A method for performing a finish machining of a tooth surface according to claim 1, wherein said gear to be machined and said counter gear are meshed with each other while having axes of said both gears arranged in parallel and are rotated while repeating the expansion and narrowing of a distance between said axes of said both gears.

9. A method for performing a finish machining of a tooth surface according to claim 1, wherein said gear to be machined and said counter gear are meshed with each other while having axes of said both gears arranged in parallel and are rotated while reciprocably tilting at least one shaft from a parallel state with respect to the other shaft at a given angle.

10. A method for performing a finish machining of a tooth surface according to claim 1, wherein said gear to be machined and said counter gear are rotated while having axial directions of said both gears to intersect each other at an approximately right angle.

11. A method for performing a finish machining of a tooth surface according to claim 1, wherein said gear to be machined and said counter gear are rotated while relatively moving a contacting position in the state that said both gears are meshed with each other.

12. A method for performing a finish machining of a tooth surface according to claim 1, wherein said gear to be machined or said counter gear are rotated until the vibration and noises derived from said meshing reach a desired magnitude.

13. A method for performing a finish machining of a tooth surface according to claim 1, wherein said gear to be machined and said counter gear are rotated until the surface roughness of said tooth surface of said gear to be machined reaches a desired magnitude.

14. A method for performing a finish machining of a tooth surface according to claim 1, wherein said meshing of said gear to be machined and said counter gear is performed 10000 to 20000 times.

15. A method for performing a finish machining of a tooth surface according to claim 1, wherein said rotation is performed while measuring the vibration or noises derived from said meshing and said rotation is finished based on a measured value of said vibration or said noises.

16. A method for performing a finish machining of a tooth surface according to claim 15, wherein said measurement of said vibration or said noises is continuously performed at fixed or unfixed intervals and said rotation is finished at a point of time that an obtained measured value becomes smaller than a given value.

17. A method for performing a finish machining of a tooth surface according to claim 15, wherein said measurement of said vibration or said noises is continuously performed at fixed or unfixed intervals and said rotation is finished at a point of time that an obtained measured value is increased three or more times continuously.

18. A method for performing a finish machining of a tooth surface according to claim 16, wherein said measurement of said vibration or said noises is continuously performed at fixed or unfixed intervals and said rotation is finished at a point of time that an approximation formula aX + B on the time-sequential change of an obtained measured value with respect to time X is obtained and a gradient a of said approximation formula turns from negative to positive.

19. A method for performing a finish machining of a tooth surface of a gear to be machined and a tooth surface of another gear to be machined being **characterized in that** in the state that at least one another gear to be machined is meshed with said gear to be machined, said gears are rotated while supplying water or an aqueous solution containing no abrasive grains to meshing portions of said gears whereby a surface with small surface roughness is formed on said respective tooth surfaces of said gear to be machined and said another gear to be machined.

20. A gear having a tooth surface thereof subjected to a finish machining on said tooth surface to obtain a surface of small surface roughness, wherein
said finish machining of said tooth surface of said gear is performed by a method for performing a finish machining of a tooth surface according to claim 1.

21. A device for performing a finish machining of a tooth surface of a gear to be machined, said device comprising:
a first rotary shaft which rotatably supports said gear to be machined thereon,
a second rotary shaft which rotatably supports a counter gear which can be meshed with said gear to be machined thereon, and
water supply means which supplies water or an aqueous solution containing no abrasive grains to meshing portions of said gear to be machined and said counter gear,
wherein said gear to be machined and said counter gear can be rotated while supplying said water or aqueous solution to said meshing portions.

22. A device for performing a finish machining of a tooth surface according to claim 21, wherein a liquid reservoir portion which receives said water or aqueous solution is disposed below said gear to be machined and said counter gear, and said device further includes liquid circulation means which filters said water or aqueous solution stored in said liquid reservoir portion and supplies said water or aqueous solution to said meshing portions again.

23. A device for performing a finish machining of a tooth surface according to claim 21, wherein said device includes torque adjustment means which applies a given pressure between contacting tooth surfaces at said meshing portions of said gear to be machined and said counter gear.

24. A method for performing a finish machining of a tooth surface according to claim 21, wherein said device for performing a finish machining of a tooth surface includes rotary shaft moving means which generates the relative movement of said first rotary shaft and said second rotary shaft in such a way that a contacting position at said meshing portions of said gear to be machined and said counter gear is changed.
